(19) <span>Europäisches Patentamt European Patent Office Office européen des brevets</span>

(11) **EP 4 343 383 A1**

(12) **EUROPEAN PATENT APPLICATION**

(43) Date of publication:
   **27.03.2024 Bulletin 2024/13**

(21) Application number: **23194715.1**

(22) Date of filing: **31.08.2023**

(51) International Patent Classification (IPC):
   **G01S 17/87** (2020.01)    **G01S 17/89** (2020.01)
   **G06T 5/50** (2006.01)    **G01C 21/32** (2006.01)
   **G06F 17/16** (2006.01)

(52) Cooperative Patent Classification (CPC):
   **G01S 17/87; G01S 17/89; G06F 17/16; G06T 7/33;**
   G06T 2207/10028; G06T 2207/10044;
   G06T 2207/20221; G06T 2207/30252

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **KH MA MD TN**

(30) Priority: **20.09.2022 CN 202211140938**

(71) Applicant: **Innovusion (Wuhan) Co., Ltd.**
   **Wuhan City, Hubei 430056 (CN)**

(72) Inventors:
   • **WEI, Yutang**
     **WUHAN CITY, 430056 (CN)**

   • **WANG, Chongqing**
     **WUHAN CITY, 430056 (CN)**
   • **ZHU, Boyu**
     **WUHAN CITY, 430056 (CN)**
   • **CHEN, Wenguang**
     **WUHAN CITY, 430056 (CN)**
   • **DENG, Changmin**
     **WUHAN CITY, 430056 (CN)**

(74) Representative: **Sackin, Robert**
   **Reddie & Grose LLP**
   **The White Chapel Building**
   **10 Whitechapel High Street**
   **London E1 8QS (GB)**

(54) **DATA FUSION METHOD AND APPARATUS FOR LIDAR SYSTEM AND READABLE STORAGE MEDIUM**

(57)    The present disclosure provides a data fusion method (200) and apparatus for a LiDAR system (110), where the LiDAR system (110) includes a source LiDAR (111) and at least one secondary LiDAR (112), and the data fusion method (200) includes: obtaining a first point cloud data set of the LiDAR system (110) at a first time point and a second point cloud data set of the system at a second time point separately (210); determining a plurality of candidate transformation matrix sets based on the first point cloud data set, where each candidate transformation matrix set includes a plurality of candidate transformation matrices for transforming point cloud data of a corresponding secondary LiDAR (112) into a coordinate system of the source LiDAR (111) (220); selecting a target transformation matrix from a plurality of candidate transformation matrices in each of the plurality of candidate transformation matrix sets based on the second point cloud data set (230); and fusing point cloud data of the source LiDAR (111) and point cloud data of the at least one secondary LiDAR (112) based on a target transformation matrix corresponding to each secondary LiDAR (112) (240).

FIG. 1

**Description**

**Technical Field**

The present disclosure relates to LiDAR-based point cloud measurement, and in particular, to a data fusion method and apparatus for a LiDAR system, a computer device, and a computer-readable storage medium.

**Background Art**

LiDARs are widely applied in autonomous driving vehicles, drones, autonomous robots, satellites, rockets, etc. A LiDAR measures a propagation distance between itself and a target object by emitting laser light. The LiDAR can also output point cloud data by analyzing information such as magnitude of reflection energy, and amplitude, frequency, and phase of a reflection spectrum of the surface of the target object, thereby presenting accurate three-dimensional structural information of the target object and further generating a three-dimensional image of the target object.

A related image collection facility generally uses a combination of a plurality of LiDARs, that is, a LiDAR system, to obtain a three-dimensional image of a target object. The purpose of using a plurality of LiDARs is to obtain image information of the target object from a plurality of different angles, so as to obtain a more comprehensive three-dimensional image of the target object. However, fusion of image information from a plurality of different angles is not accurate in the related technology. As a result, an accurate three-dimensional image cannot be obtained.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

**Summary of the Invention**

The present disclosure provides a data fusion method and apparatus for a LiDAR system and a readable storage medium, to improve fusion accuracy of image information from a plurality of different angles, thereby improving precision of a final three-dimensional image.

According to an aspect of the present disclosure, there is provided a data fusion method for a LiDAR system, where the LiDAR system includes a source radar and at least one secondary radar, and the data fusion method includes: obtaining a first point cloud data set of the LiDAR system at a first time point and a second point cloud data set of the system at a second time point separately, where the first point cloud data set includes first point cloud data of the source radar and first point cloud data of the at least one secondary radar, and the second point cloud data set includes second point cloud data of the source radar and second point cloud data of the at least one secondary radar; determining a plurality of candidate transformation matrix sets based on the first point cloud data set, where each candidate transformation matrix set corresponds to one secondary radar and includes a plurality of candidate transformation matrices for transforming point cloud data of the corresponding secondary radar into a coordinate system of the source radar; selecting a target transformation matrix from a plurality of candidate transformation matrices in each of the plurality of candidate transformation matrix sets based on the second point cloud data set; and fusing point cloud data of the source radar and point cloud data of the at least one secondary radar based on a target transformation matrix corresponding to each secondary radar.

According to another aspect of the present disclosure, there is provided a data fusion apparatus for a LiDAR system, where the LiDAR system includes a source radar and at least one secondary radar, and the data fusion apparatus includes: a first obtaining unit configured to obtain a first point cloud data set of the LiDAR system at a first time point and a second point cloud data set of the system at a second time point separately, where the first point cloud data set includes first point cloud data of the source radar and first point cloud data of the at least one secondary radar, and the second point cloud data set includes second point cloud data of the source radar and second point cloud data of the at least one secondary radar; a determining unit configured to determine a plurality of candidate transformation matrix sets based on the first point cloud data set, where each candidate transformation matrix set corresponds to one secondary radar and includes a plurality of candidate transformation matrices for transforming point cloud data of the corresponding secondary radar into a coordinate system of the source radar; a selection unit configured to select a target transformation matrix from a plurality of candidate transformation matrices in each of the plurality of candidate transformation matrix sets based on the second point cloud data set; and a fusion unit configured to fuse point cloud data of the source radar and point cloud data of the at least one secondary radar based on a target transformation matrix corresponding to each secondary radar.

According to still another aspect of the present disclosure, there is provided a computer device, including: at least one processor; and at least one memory having a computer program stored thereon, where the computer program, when executed by the at least one processor, causes the at least one processor to perform the above method.

According to yet another aspect of the present disclosure, there is provided a computer-readable storage medium having a computer program stored thereon, where the computer program, when executed by a processor, causes the processor to perform the above method.

In the method according to the embodiments of the present disclosure, the candidate transformation matrix set including the plurality of candidate transformation matrices is determined first based on the first point cloud data set at the first time point, and the target transformation matrix with the highest precision is then selected from the candidate transformation matrix set based on the second point cloud data set at the second time point. The method in the embodiments determines the optimal transformation matrix based on the point cloud data at the two different time points. Compared to determining a transformation matrix based only on point cloud data at one time point, the obtained target transformation matrix is more accurate, thereby improving accuracy of subsequent fusion of the point cloud data.

These and other aspects of the present disclosure will be clear from the embodiments described below, and will be clarified with reference to the embodiments described below.

## Brief Description of the Drawings

More details, features, and advantages of the present disclosure are disclosed in the following description of exemplary embodiments in conjunction with the drawings, in which:

FIG. 1 is a schematic diagram showing an example image collection facility in which various methods described herein may be implemented according to an exemplary embodiment;

FIG. 2 is a flowchart showing a data fusion method for a LiDAR system according to an exemplary embodiment;

FIG. 3 is a flowchart showing a method for determining a plurality of candidate transformation matrix sets based on a first point cloud data set according to an exemplary embodiment;

FIG. 4 is a flowchart showing a method for determining a plurality of candidate transformation matrices based on a plurality of preselected transformation matrices according to an exemplary embodiment;

FIG. 5 is a flowchart showing a method for selecting a target transformation matrix from a candidate transformation matrix set according to an exemplary embodiment;

FIG. 6 is a flowchart showing a method for correcting a determined target transformation matrix according to an exemplary embodiment;

FIG. 7 is schematic block diagram of a data fusion apparatus for a LiDAR system according to an exemplary embodiment; and

FIG. 8 is a block diagram showing an exemplary computer device that can be applied to an exemplary embodiment.

## Detailed Description of Embodiments

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same example of the element, and in some cases, based on contextual descriptions, they may also refer to different examples.

The terms used in the description of the various examples in the present disclosure are merely for the purpose of describing particular examples, and are not intended to be limiting. If the number of elements is not specifically defined, there may be one or more elements, unless otherwise expressly indicated in the context. As used herein, the term "plurality of" means two or more, and the term "based on" should be interpreted as "at least partially based on". Moreover, the terms "and/or" and "at least one of ..." encompass any one of and all possible combinations of the listed items.

An image collection facility generally uses a combination of a plurality of LiDARs, that is, a LiDAR system, to obtain a three-dimensional image of a target object. The purpose of using a plurality of LiDARs is to obtain image information of the target object from a plurality of different angles, so as to obtain a more comprehensive three-dimensional image of the target object. Therefore, how to fuse point cloud data of a plurality of LiDARs in a LiDAR system has become an important research direction in this field.

Before introducing the exemplary embodiments of the present disclosure, some terms used herein are first explained.

1. Point cloud

A point cloud is a massive collection of points that represent surface characteristics of a target object and are obtained through data collection on the target object by using measuring instruments in 3D engineering. Each point contains X, Y, and Z geometric coordinates of the target object, an intensity value and a classification value of a signal returned from the surface of the object, and other information. When these points are combined, they form a point cloud. The point cloud may more realistically restore a three-dimensional effect of the target object and implement visualization.

2. Transformation matrix

A transformation matrix herein is a coordinate transformation matrix between point clouds in different coordinate systems, which transforms point clouds in different coordinate systems into the same coordinate system. For example, for two pieces of point cloud data obtained from different scanning perspectives (for example, obtained by scanning by two LiDARs mounted at different angles), the transformation matrix is used to transform one piece of point cloud data into a coordinate system of the other piece of point cloud data, so that the two pieces of point cloud data have the same scanning perspective.

Exemplary embodiments of the present disclosure are described in detail below in conjunction with the drawings.

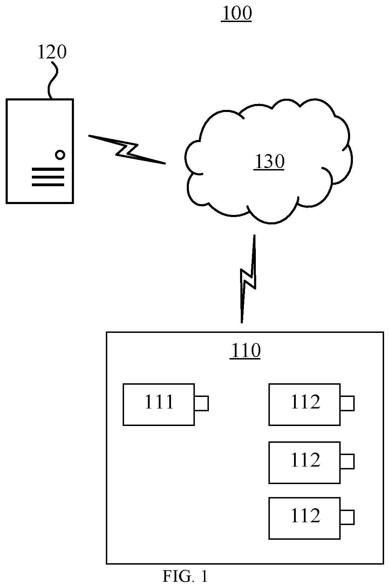

FIG. 1 is a schematic diagram showing an example image collection facility 100 in which various methods described herein may be implemented according to an exemplary embodiment.

Referring to FIG. 1, the image collection facility 100 includes a LiDAR system 110, a server 120, and a network 130 communicatively coupling the LiDAR system 110 with the server 120.

The LiDAR system 110 includes a plurality of LiDARs and a related processor, and a scenario in which the system is used includes, but is not limited to, a system with a plurality of sensors, such as various carriers, a roadside detection apparatus, dock monitoring, intersection monitoring, and a factory. In some examples, the LiDAR system 110 may be arranged, for example, on both sides of a road or at an intersection of roads, to obtain a road condition point cloud image of the road or a related point cloud image of motor vehicles on the road. In some other examples, the LiDAR system 110 may be arranged, for example, on a carrier, and a plurality of LiDARs of the LiDAR system are arranged at different positions of the carrier to obtain objects in front, behind, or on both sides of the carrier. The carrier includes, but is not limited to, vehicles, aircraft, drones, ships, etc.

The plurality of LiDARs may receive light signals and convert them into electric signals. The related processor processes these electric signals to generate a point cloud image. It can be understood that the term "radar" (including "source radar" and "secondary radar" described below) refers to a LiDAR, that is, a radar that detects a position, a speed, and other characteristic quantities of a target by emitting laser beams. The processor further uploads the obtained point cloud image data to the server 120, and the server 120 may process the uploaded point cloud image data. In some other examples, fusion of point cloud data may also be performed in the related processor that is arranged on the radar system side, and then the fused data may be sent to the server 120. The plurality of LiDARs may include a source radar 111 and at least one secondary radar 112 (generally a plurality of secondary radars 112), and the source radar 111 and these secondary radars 112 have different scanning perspectives, so as to obtain more complete data information. During subsequent processing of the data by the server 120, point cloud data captured by the at least one secondary radar 112 may be transformed into a coordinate system of the source radar 111, that is, the point cloud data of the at least one secondary radar 112 are all adjusted for unified processing from a scanning perspective of the source radar 111, so that the data of the plurality of LiDARs may be integrated into a complete point cloud image. In some examples, any of the plurality of LiDARs may be used as the source radar, and the other LiDARs may be used as the secondary radar.

The server 120 is typically deployed by an Internet service provider (ISP) or an Internet content provider (ICP). The server 120 may be a single server, a cluster of a plurality of servers, a distributed system, or a cloud server providing basic cloud services (such as a cloud database, cloud computing, cloud storage, cloud communication). It is to be understood that, although FIG. 1 shows that the server 120 communicates with only one LiDAR system 110, the server 120 can provide backend services for a plurality of LiDAR systems 110 at a time.

Examples of the network 130 include a combination of a local area network (LAN), a wide area network (WAN), a personal area network (PAN), and/or a communication network such as the Internet. The network 130 may be a wired or wireless network. In some embodiments, data exchanged over the network 130 is processed using technologies and/or formats including HyperText Markup Language (HTML), Extensible Markup Language (XML), etc. In addition, all or some links may be encrypted using encryption technologies such as Secure Sockets Layer (SSL), Transport Layer Security (TLS), a virtual private network (VPN), Internet Protocol Security (IPsec), etc. In some embodiments, the above data communication technologies may also be replaced or supplemented with customized and/or dedicated data communication technologies.

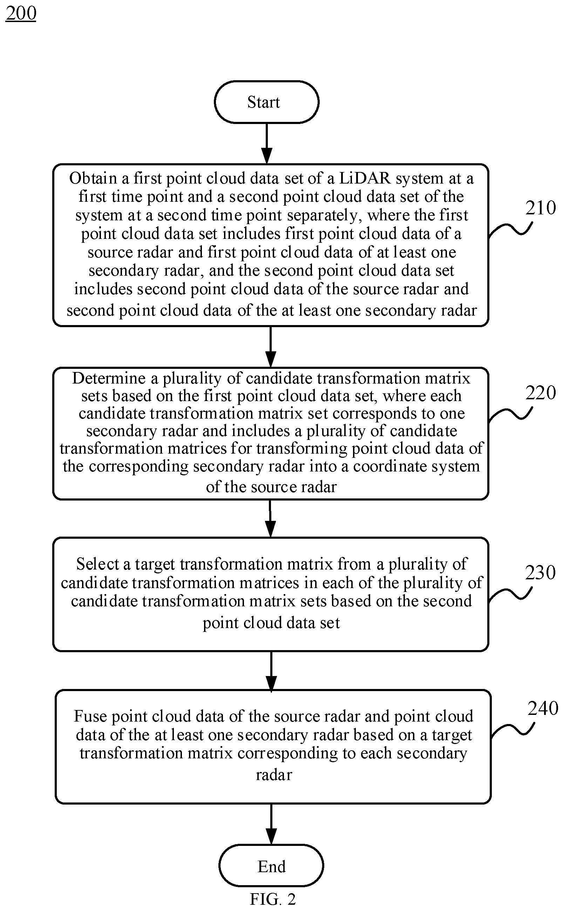

FIG. 2 is a flowchart showing a data fusion method 200 for a LiDAR system 110 according to an exemplary embodiment. The method 200 may be performed at a server (for example, the server 120 shown in FIG. 1). In some embodiments, the method 200 may be performed by a combination of the LiDAR system 110 and the server (for example, the server 120). In the following, the server 120 is taken as an example of the execution body for detailed description of the steps of the method 200.

Referring to FIG. 2, the method 200 includes the following steps:

step 210: obtaining a first point cloud data set of the LiDAR system 110 at a first time point and a second point cloud data set of the system at a second time point separately, where the first point cloud data set includes first point cloud data of the source radar 111 and first point cloud data of the at least one secondary radar 112, and the second point cloud data set includes second point cloud data of the source radar 111 and second point cloud data of the at least one secondary radar 112;

step 220: determining a plurality of candidate transformation matrix sets based on the first point cloud data set, where each candidate transformation matrix set corresponds to one secondary radar 112 and includes a plurality of candidate transformation matrices for transforming point cloud data of the corresponding secondary radar 112 into a coordinate system of the source radar 111;

step 230: selecting a target transformation matrix from a plurality of candidate transformation matrices in each of the plurality of candidate transformation matrix sets based on the second point cloud data set; and

step 240: fusing point cloud data of the source radar 111 and point cloud data of the at least one secondary radar 112 based on a target transformation matrix corresponding to each secondary radar 112.

According to this embodiment of the present disclosure, the point cloud data collected by the plurality of LiDARs of the LiDAR system can be fused based on the point cloud data of the plurality of LiDARs without relying on other external sensors, which saves device costs.

In the method according to this embodiment of the present disclosure, the candidate transformation matrix set including the plurality of candidate transformation matrices is determined first based on the first point cloud data set at the first time point, and the target transformation matrix with the highest precision is then selected from the candidate transformation matrix set based on the second point cloud data set at the second time point. The method in this embodiment determines the optimal transformation matrix based on the point cloud data at the two different time points. Compared to determining a transformation matrix based only on point cloud data at one time point, the obtained target transformation matrix is more accurate.

Steps 210 to 230 may occur before the LiDAR system 110 is officially used and are used for calibration between the source radar 111 and the at least one secondary radar 112 (generally a plurality of secondary radars 112). The first point cloud data set obtained at the first time point and the second point cloud data set obtained at the second time point in step 210 may be obtained by the system 110 before communicating with the server 120, that is, may be understood as being obtained offline. The first time point and the second time point are two different time points, the second time point may occur after the first time point, there is a period of time between them, and the period of time may be, for example, a time interval between adjacent two or multiple frames of point cloud data, or may be 1 h, 2 h, or even 1 day. The point cloud data set obtained by each LiDAR in the LiDAR system 110 includes coordinate data obtained from a large number of laser detection points.

The first point cloud data set includes the first point cloud data of the source radar 111 and the first point cloud data of the at least one secondary radar 112. In step 220, the plurality of candidate transformation matrix sets may be determined respectively based on differences between the first point cloud data of the source radar 111 and the first point cloud data of the at least one secondary radar 112, and each candidate transformation matrix set corresponds to one secondary radar 112. During determining each candidate transformation matrix set, the first point cloud data of the source radar 111 is compared with the first point cloud data of the corresponding secondary radar 112, so as to obtain a plurality of optional candidate transformation matrices through calculations. The plurality of candidate transformation matrices in each candidate transformation matrix set may be used for transforming point cloud data of the corresponding secondary radar 112 into the coordinate system of the source radar 111.

For example, in a case that there are three secondary radars 112 (which are a first secondary radar 112, a second secondary radar 112, and a third secondary radar 112), three candidate transformation matrix sets (which are a first candidate transformation matrix set, a second candidate transformation matrix set, and a third candidate transformation matrix set) are generated accordingly in step 220, and each candidate transformation matrix set includes a plurality of candidate transformation matrices, where the plurality of candidate transformation matrices in the first candidate transformation matrix set may be applied to point cloud data of the first secondary radar 112, thereby obtaining transformed point cloud data in the coordinate system of the source radar 111, and a similar case is applied to the second candidate transformation matrix set and the corresponding second secondary radar 112 as well as to the third candidate transformation matrix set and the corresponding third secondary radar 112. However, the candidate transformation matrices in each candidate transformation matrix set vary in accuracy. Therefore, in subsequent steps, there is a need to perform further selection on the plurality of candidate transformation matrices in any candidate transformation matrix set, such as selecting a candidate transformation matrix with the highest transformation accuracy as the target transformation matrix.

In step 230, the process of selecting the target transformation matrix may be completed with the help of the second point cloud data set, that is, the second point cloud data set is used for verifying each candidate transformation matrix in any candidate transformation matrix set, to determine transformation accuracy of the candidate transformation matrix. In step 230, for example, the candidate transformation matrix with the highest transformation accuracy is selected as the target transformation matrix. Specifically, a plurality of candidate transformation matrices in one candidate transformation matrix set may be applied to the second point cloud data of the corresponding secondary radar 112 separately to obtain a plurality of pieces of second transformed point cloud data in the coordinate system of the source radar 111, and the second transformed point cloud data is then compared with the second point cloud data of the source radar 111. The smaller a difference between both is, the more accurate the corresponding candidate transformation matrix is. Subsequently, the candidate transformation matrix with the smallest difference may be selected from the corresponding candidate transformation matrix set as the target transformation matrix.

In step 240, that is, when the LiDAR system 110 starts to be used, using the plurality of target transformation matrices selected in step 230 (each target transformation matrix corresponds to a coordinate transformation between one secondary radar 112 and the source radar 111) can ensure that the point cloud data of the secondary radar 112 is transformed into the coordinate system of the source radar 111 with high accuracy, so that an overall fusion effect of the image data of the LiDAR system 110 is better.

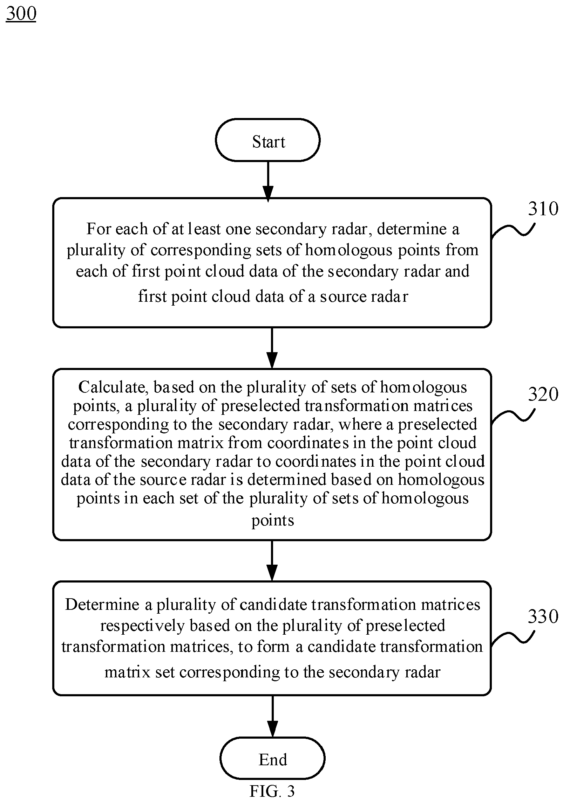

FIG. 3 is a flowchart showing a method 300 for determining a plurality of candidate transformation matrix sets based on the first point cloud data set according to an embodiment of the present disclosure. Referring to FIG. 3, the method 300 includes:

step 310: for each of the at least one secondary radar 112: determining a plurality of corresponding sets of homologous points from each of first point cloud data of the secondary radar 112 and the first point cloud data of the source radar 111;

step 320: calculating, based on the plurality of sets of homologous points, a plurality of preselected transformation matrices corresponding to the secondary radar 112, where a preselected transformation matrix from coordinates in the point cloud data of the secondary radar 112 to coordinates in the point cloud data of the source radar 111 is determined based on homologous points in each set of the plurality of sets of homologous points; and

step 330: determining a plurality of candidate transformation matrices respectively based on the plurality of preselected transformation matrices, to form a candidate transformation matrix set corresponding to the secondary radar 112.

In order to simplify the description, only the process of determining a candidate transformation matrix set of one secondary radar 112 is described in detail in the subsequent description, and it can be understood that the processes of determining transformation matrix sets of the other secondary radars 112 may be similar, and thus will not be described in detail.

One set of homologous points may be determined as follows: a set of points is selected from the first point cloud data of the secondary radar 112, and a corresponding set of points is selected from the first point cloud data of the source radar 111, these two sets of points have the same number of points, and there is a one-to-one correspondence between the two sets of points, that is, a pair of corresponding points in the two sets of points represent a same static location in the physical world. For example, the source radar 111 scans information about a road at a first angle, the secondary radar 112 scans information about the road at a second angle, and both radars have scanned a same road marking, so that the first point cloud data of the two both contain a target point representing a same location on the road marking (for example, an end point of the road marking). Since the scanning angles of the two radars are different, coordinate locations of the target point in the point cloud data of the two radars are not the same. A plurality of target points are selected to form a set of points, which is referred to as "a set of homologous points" above. In some embodiments, the first point cloud data of the secondary radar 112 and the first point cloud data of the source radar 111 may be sent to a labeling platform, to label a set of homologous points. In some embodiments, the same static location may be a movable target set by human. "Movable" means that a location of the target may be set as required, and a set of homologous points is determined based on coordinates of targets displayed in an image. In some other embodiments, machine learning may also be used to identify point cloud information to determine a set of homologous points.

In step 310, a plurality of sets of homologous points may be determined by using the above method based on different selected static objects, and each set of homologous points is determined based on different static objects or different spatial distributions of points in point cloud data. For example, the first point cloud data of both the source radar 111 and the secondary radar 112 contain a plurality of different objects captured by both the two radars, including a street lamp, a tree beside a road or a road sign, etc., and a set of homologous points can be determined comprehensively based on the different objects and different distributions of points. As mentioned above, a set of homologous points can be determined by human by setting targets in the physical world. For example, these targets may include a circular signboard, a rectangular signboard, a ground marking, etc., a first set of homologous points may be, for example, the center of the circular signboard and a corner point of the ground marking, and a second set of homologous points may be a corner point of the rectangular signboard and a corner point of the ground marking, etc. In some other embodiments, a plurality of sets of homologous points may be determined by using another method. For example, a plurality of overlapping view areas between images formed by the first point cloud data of the source radar 111 and the first point cloud data of the secondary radar 112 may be analyzed first, and a set of homologous points may be generated based on each overlapping view area (or a part of the overlapping view area), so that a plurality of sets of homologous points are obtained finally. To facilitate further screening of transformation matrices subsequently, at least four sets of homologous points need to be determined, that is, at least four preselected transformation matrices need to be generated.

In step 320, one preselected transformation matrix may be determined correspondingly based on each set of homologous points. This step may also be referred to as first registration. Specifically, a relationship between coordinate information of the set of homologous points in the first point cloud data of the source radar 111 and coordinate information of the set of homologous points in the first point cloud data of the corresponding secondary radar 112 may be determined, and based on which, a transformation matrix for transforming the point cloud data of the secondary radar 112 into the coordinate system of the source radar 111 is determined as a preselected transformation matrix. Determining a transformation matrix based on coordinates of a set of homologous points in different point cloud data is well known to those skilled in the field and will not be detailed here.

Each of the plurality of preselected transformation matrices includes a rotation matrix and a translation matrix. Therefore, the preselected transformation matrix has rotation parameters representing the rotation matrix and translation parameters representing the translation matrix. The preselected transformation matrix may be expressed in the following form:

$$M = \begin{bmatrix} r_{11} & r_{12} & r_{13} & t_x \\ r_{21} & r_{22} & r_{23} & t_y \\ r_{31} & r_{32} & r_{33} & t_z \\ v_x & v_y & v_z & p \end{bmatrix}$$

$$(1)$$

The above transformation matrix may alternatively be expressed as $M_1 = \begin{bmatrix} R & T \\ V & P \end{bmatrix}$, where

$R = \begin{bmatrix} r_{11} & r_{12} & r_{13} \\ r_{21} & r_{22} & r_{23} \\ r_{31} & r_{32} & r_{33} \end{bmatrix}$ is the rotation matrix, $T = \begin{bmatrix} t_x \\ t_y \\ t_z \end{bmatrix}$ is the translation matrix, $V = [v_x\ v_y\ v_z]$ is a perspective transformation vector, and $P = [p]$ is a scale factor. Since transformation of a transformation matrix between a plurality of LiDARs is rigid transformation, only the rotation matrix R and the translation matrix T in the transformation matrix need to be focused on. Therefore, the transformation matrix $M$ may alternatively be expressed as $M = \begin{bmatrix} R & T \\ 0 & 1 \end{bmatrix}$.

The rotation matrix R may be subsequently expressed by $q = q_0 + q_1 i + q_2 j + q_3 k$, where

$$\begin{bmatrix} q_0 \\ q_1 \\ q_2 \\ q_3 \end{bmatrix} = \begin{bmatrix} \cos\frac{\alpha}{2}\cos\frac{\beta}{2}\cos\frac{\gamma}{2} - \sin\frac{\alpha}{2}\sin\frac{\beta}{2}\sin\frac{\gamma}{2} \\ \sin\frac{\alpha}{2}\cos\frac{\beta}{2}\cos\frac{\gamma}{2} + \cos\frac{\alpha}{2}\sin\frac{\beta}{2}\sin\frac{\gamma}{2} \\ \cos\frac{\alpha}{2}\sin\frac{\beta}{2}\cos\frac{\gamma}{2} - \sin\frac{\alpha}{2}\cos\frac{\beta}{2}\sin\frac{\gamma}{2} \\ \cos\frac{\alpha}{2}\cos\frac{\beta}{2}\sin\frac{\gamma}{2} + \sin\frac{\alpha}{2}\sin\frac{\beta}{2}\cos\frac{\gamma}{2} \end{bmatrix}.$$

In other words, there are six unknown parameters: $\alpha$, $\beta$, $\gamma$, $t_x$, $t_y$, and $t_z$ involved in the transformation matrix, where $\alpha$, $\beta$, and $\gamma$ are the rotation parameters, which respectively represent angles of rotation of the point cloud along x, y, and z axes, $t_x$, $t_y$, and $t_z$ are the translation parameters, which respectively represent translation quantities along the x, y, and z axes.

The determining, based on homologous points in each set of the plurality of sets of homologous points, a preselected transformation matrix from coordinates in the point cloud data of the secondary radar 112 to coordinates in the point cloud data of the source radar 111 includes: determining rotation parameters and translation parameters of a corresponding preselected transformation matrix based on coordinates of the homologous points in each of the first point cloud data of the secondary radar 112 and the first point cloud data of the source radar 111. As described above, the transformation matrix involves six unknown parameters in total, that is, three rotation parameters and three translation parameters. The process of determining a preselected transformation matrix based on each set of homologous points is actually a process of solving the six unknown parameters.

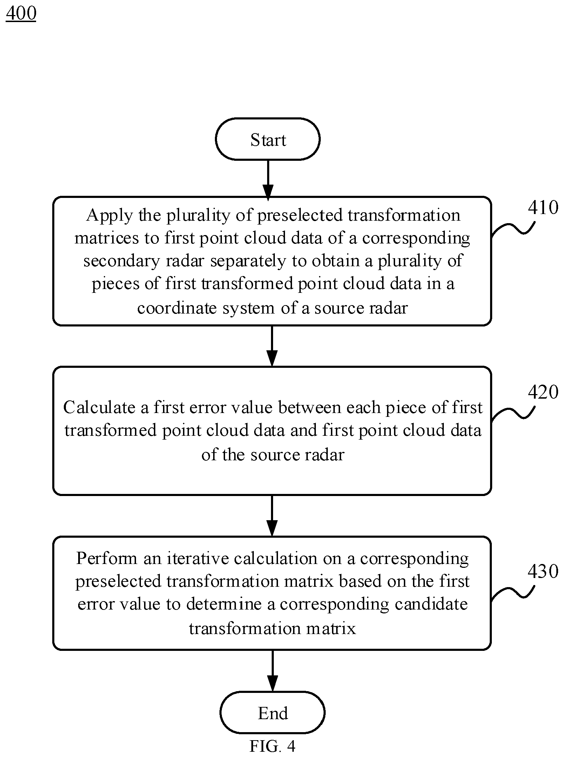

How to select a plurality of candidate transformation matrices from the plurality of preselected transformation matrices to form a candidate transformation matrix set corresponding to the secondary radar 112 in step 330 is described in detail below. FIG. 4 is a flowchart showing a method 400 for determining a plurality of candidate transformation matrices respectively based on a plurality of preselected transformation matrices according to an embodiment of the present disclosure. The method may also be referred to as second registration. As shown in FIG. 4, the method 400 includes:

step 410: applying the plurality of preselected transformation matrices to the first point cloud data of the corresponding secondary radar 112 separately to obtain a plurality of pieces of first transformed point cloud data in the coordinate system of the source radar 111;
step 420: calculating a first error value between each piece of first transformed point cloud data and the first point cloud data of the source radar 111; and
step 430: performing an iterative calculation on the corresponding preselected transformation matrix based on the first error value to determine a corresponding candidate transformation matrix.

In step 410, during the process of applying the preselected transformation matrix to the first point cloud data of the corresponding secondary radar 112, coordinates of each point in the first point cloud data of the secondary radar 112 are transformed according to transformation rules represented by the preselected transformation matrix, so that each point in the first point cloud data of the secondary radar 112 is transformed to the coordinate system of the source radar 111, thereby obtaining the transformed points, and these transformed points together form the first transformed point cloud data.

It can be understood that a plurality of points in the first transformed point cloud data may be very close to a plurality of corresponding points in the first point cloud data of the source radar 111, but the evenness of a spacing between each pair of the plurality of pairs of points may vary depending the accuracy of the applied preselected transformation matrix. For a preselected transformation matrix with higher accuracy, the evenness of a spacing between each pair of the plurality of pairs of points may be better, that is, a spacing value between each pair of points is relatively even; however, for a preselected transformation matrix with lower accuracy, the evenness of a spacing between each pair of the plurality of pairs of points may be poor, that is, a spacing value between each pair of points differs greatly.

A first error value between each piece of first transformed point cloud data of the secondary radar 112 and the first point cloud data of the source radar 111 in step 420 may be calculated in the following manner: calculating a plurality of first distances between a plurality of points in the first transformed point cloud data and corresponding points in the first point cloud data of the source radar 111, and determining the first error value based at least on the plurality of first distances. In some embodiments, an average value of the plurality of first distances may be directly used as the first error value. In some other embodiments, as shown in the following formula, it may be defined that a convergent function $\theta(R,T)$ represents the first error value:

$$\theta(R,T) = \frac{1}{n}\sum_{i=1}^{n}\left|A_1^i - R \cdot A_2^i - T\right|^2 \tag{2}$$

In the formula, $A_1^i$ represents coordinate values of each point in the first point cloud data of the source radar 111, $A_2^i$ represents coordinate values of each point in the first point cloud data of a corresponding secondary radar 112, R represents a rotation matrix of a corresponding preselected transformation matrix, T represents a translation matrix of the corresponding preselected transformation matrix, and n represents the number of points in the first point cloud data. It can be seen from the above that, $\theta(R,T)$ may represent an average value of the plurality of first distances.

In addition to selecting the average value of the first distances or the convergent function as the first error value, in some embodiments, an average variance of the plurality of first distances can also be calculated as the first error value. In some other embodiments, the first error value may be determined by using other methods, for example, using a maximum value of the plurality of first distances as the first error value, etc., which will not be listed here.

The larger the first error value is, the lower the accuracy of the corresponding preselected transformation matrix is. Therefore, in step 430, the plurality of preselected transformation matrices may be applied to the first point cloud data of the corresponding secondary radar 112 separately, and then whether a convergent function $\theta(R,T)$ that is used as the first error value is less than a first threshold is determined. If the convergent function $\alpha(R,T)$ is greater than the first threshold, a plurality of iterative calculations are performed on the preselected transformation matrix until the convergent function $\alpha(R,T)$ is less than the first threshold or until the number of iterations reaches a preset maximum number of iterations, so as to obtain a corresponding candidate transformation matrix.

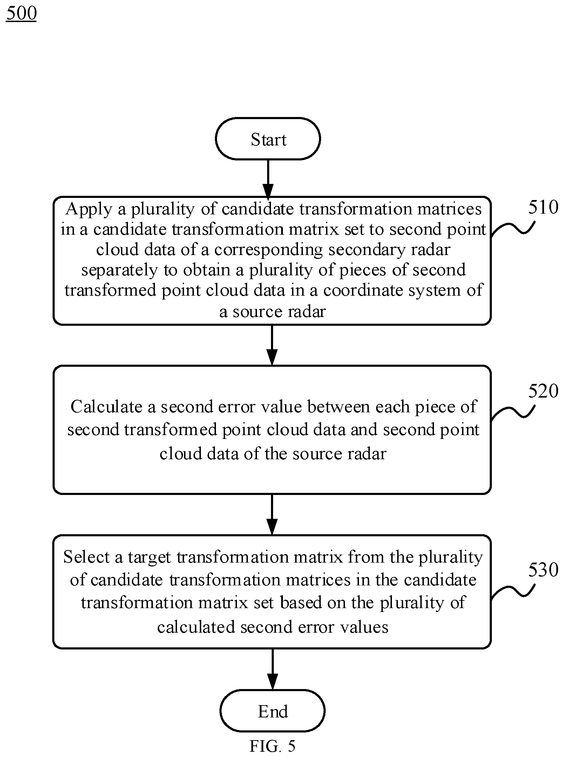

How to determine a target transformation matrix based on the second point cloud data set is described below with reference to FIG. 5. FIG. 5 is a flowchart showing a method 500 for selecting a target transformation matrix from a candidate transformation matrix set according to an embodiment of the present disclosure. As shown in FIG. 5, the method 500 includes:

> step 510: applying the plurality of candidate transformation matrices in the candidate transformation matrix set to the second point cloud data of the corresponding secondary radar 112 separately to obtain a plurality of pieces of second transformed point cloud data in the coordinate system of the source radar 111;
> step 520: calculating a second error value between each piece of second transformed point cloud data and the second point cloud data of the source radar 111; and
> step 530: selecting a target transformation matrix from the plurality of candidate transformation matrices in the candidate transformation matrix set based on the plurality of calculated second error values.

In step 510, during the process of applying each candidate transformation matrix to the second point cloud data of the corresponding secondary radar 112, coordinates of each point in the second point cloud data of the secondary radar 112 are transformed according to transformation rules represented by the candidate transformation matrix, so that each point in the second point cloud data of the secondary radar 112 is transformed to the coordinate system of the source radar 111, thereby obtaining the transformed points, and these transformed points together form the second transformed point cloud data.

A second error value between each piece of second transformed point cloud data of the secondary radar 112 and the second point cloud data of the source radar 111 in step 520 may be calculated in the following manner: calculating an average value of a plurality of second distances between a plurality of points in the second transformed point cloud data and corresponding points in the second point cloud data of the source radar 111, and determining the second error value based at least on the average value of the plurality of second distances. For example, the average value of the plurality of second distances may be directly used as the second error value, or an average variance of the plurality of second distances may be calculated as the second error value. In some other embodiments, the second error value may be determined by using other methods, for example, using a maximum value of the plurality of second distances as the second error value, etc., which will not be listed here.

The larger the second error value is, the lower the accuracy of the corresponding candidate transformation matrix is. Therefore, in step 530, a candidate transformation matrix with a minimum second error value may be selected as the target transformation matrix. The candidate transformation matrix with the minimum second error value may be selected, such that the finally determined target transformation matrix may have the highest precision, thereby improving an image fusion effect of a plurality of subsequent LiDARs.

In some embodiments, after step 210 of obtaining a first point cloud data set of the LiDAR system 110 at a first time point and a second point cloud data set of the system at a second time point separately, the first point cloud data set and/or the second point cloud data set are further preprocessed. The preprocessing may include: performing orientation calibration on the first point cloud data set and/or the second point cloud data set and removing noise and dynamic points from the first point cloud data set and/or the second point cloud data set. In some examples, removing noise is removing outliers based on conditional filtering. In some examples, the continuity of point cloud data may be used to remove dynamic points, such as comparing data of different frames to remove point clouds of non-stationary objects in point clouds, and retaining only valid point cloud data to complete subsequent point cloud registration.

A calibration matrix for the orientation calibration may be expressed as:

$$M_{jz} = \begin{bmatrix} cos\beta & -sin\alpha & sin\beta & t_x \\ sin\alpha cos\beta & cos\alpha & -sin\alpha sin\beta & 0 \\ cos\alpha sin\beta & 0 & cos\alpha cos\beta & 0 \\ 0 & 0 & 0 & 1 \end{bmatrix} \tag{3}$$

In other words, the X-axis of the coordinate system of the radar is overlapped with a gravity direction axis through rotation of a pitch angle and a roll angle and translation along the X-axis, and the origin of coordinate is transformed to a preset reference system. Then, the point cloud is cleaned to remove noise and dynamic points to obtain the preprocessed first point cloud data set and/or the second point cloud data set. Herein, the coordinate system of the LiDAR is defined as follows: the Z-axis points forward, the Y-axis points to the right, and the X-axis points up.

In some embodiments, during the subsequent use of the LiDAR system 110, the LiDAR system 110 can also correct the target transformation matrix obtained by using the above method in real time based on a currently obtained point cloud data set. The correction operations include: obtaining a third point cloud data set of the LiDAR system 110 online at a third time point, and correcting the plurality of selected target transformation matrices based on the third point cloud data set, where the third point cloud data set includes third point cloud data of the source radar 111 and third point cloud data of the at least one secondary radar 112.

During the use of the LiDAR system 110, due to an impact of some undesired external forces (such as windy weather, artificial shaking, etc.), some LiDARs have a position offset relative to their initial mounting positions. After the offset, the target transformation matrix determined before may no longer be accurate and therefore needs to be further corrected. According to the method of this embodiment, the plurality of target transformation matrices may be automatically corrected and calibrated in real time during the use of the LiDAR system 110. Therefore, the problem of inaccurate image fusion caused by an offset of the LiDAR during use may be effectively reduced, and an effect of point cloud data fusion may be further improved.

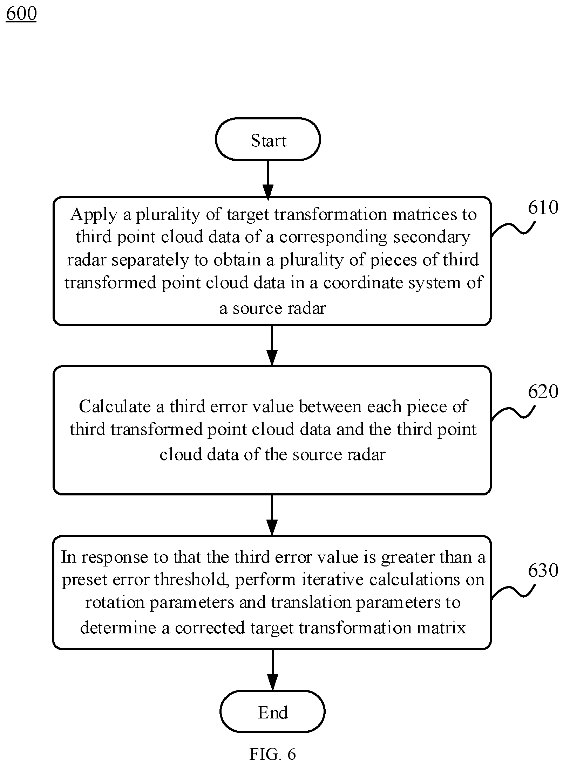

How to correct a determined target transformation matrix based on the third point cloud data set is described below with reference to FIG. 6. FIG. 6 is a flowchart showing a method 600 for correcting a determined target transformation matrix according to an embodiment of the present disclosure. As shown in FIG. 6, the method 600 includes:

step 610: applying the plurality of target transformation matrices to the third point cloud data of the corresponding secondary radar 112 separately to obtain a plurality of pieces of third transformed point cloud data in the coordinate system of the source radar 111;

step 620: calculating a third error value between each piece of third transformed point cloud data and the third point cloud data of the source radar 111; and

step 630: in response to that the third error value is greater than a preset error threshold, performing iterative calculations on the rotation parameters and the translation parameters to determine a corrected target transformation matrix.

In step 610, during the process of applying each target transformation matrix to the third point cloud data of the corresponding secondary radar 112, coordinates of each point in the third point cloud data of the secondary radar 112 are transformed according to transformation rules represented by the target transformation matrix, so that each point in the third point cloud data of the secondary radar 112 is transformed to the coordinate system of the source radar 111, thereby obtaining the transformed points, and these transformed points form the third transformed point cloud data.

A third error value between each piece of third transformed point cloud data of the secondary radar 112 and the third point cloud data of the source radar 111 in step 620 may be calculated, for example, in the following manner: calculating a plurality of third distances between a plurality of points in the third transformed point cloud data and corresponding points in the third point cloud data of the source radar 111, and determining the third error value based at least on the plurality of third distances. For example, an average value of the plurality of third distances may be directly used as the third error value, or an average variance of the plurality of third distances may be calculated as the third error value. In some other embodiments, the third error value may be determined by using other methods, for example, using a maximum value of the plurality of third distances as the third error value, etc., which will not be listed here.

The larger the third error value is, the lower the accuracy of the corresponding target transformation matrix is. Therefore, in step 630, when the third error value is greater than a preset error threshold, it indicates that the accuracy of the target transformation matrix of the corresponding secondary radar 112 is below standards and therefore the target transformation matrix needs to be corrected. For example, a mean square root of a plurality of third distances between a plurality of points in the third transformed point cloud data and corresponding points in the third point cloud data of the source radar 111 may be calculated as the third error value, as shown in the following formula:

$$RMS_i = \sum_{i=1}^{n} \| Rp_i + T - q_i \|^2 \qquad (4)$$

In the formula, $P_i$ represents coordinates of each point in the third point cloud data of the secondary radar 112, $q_i$ represents coordinates of each point in the third point cloud data of the source radar 111, R represents a rotation matrix of a corresponding preselected transformation matrix, T represents a translation matrix of the corresponding preselected transformation matrix, and n represents the number of points in the third point cloud data. When $RMS_i > E_{min}$ ($E_{min}$ is the error threshold), the target transformation matrix needs to be corrected. In this case, iterative calculations may be performed on the rotation parameters and the translation parameters of the target transformation matrix to determine a corrected target transformation matrix. The iterative calculations include but are not limited to some feedback calculations, such as: the target transformation matrix to be corrected may be modified slightly, then a variation trend of the third error value may be determined, and a correction quantity of the target transformation matrix may be adjusted through feedback based on the variation trend of the third error value. An accurate correction quantity of the target transformation matrix can be determined after a plurality of iterative calculations, so that the corresponding third error value is less than the error threshold. When $RMS_i \leq E_{min}$, the target transformation matrix is not further corrected, that is, the LiDAR system 110 continues to use the previously determined target transformation matrix.

Similar to the first error value and the second error value, the third error value may also be determined by calculating an average value of a plurality of third distances between a plurality of points in the third transformed point cloud data and corresponding points in the third point cloud data of the source radar 111 and then based at least on the average value of the plurality of third distances. For a specific process, reference is made to the related description of the first error value and the second error value, which will not be repeated here.

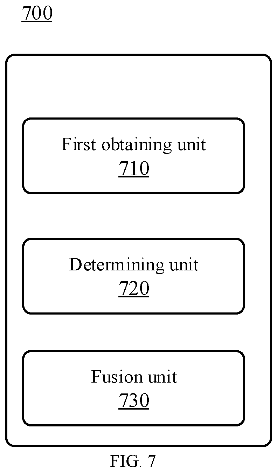

According to another aspect of the present disclosure, there is further provided a data fusion apparatus for a LiDAR system 110. FIG. 7 is schematic block diagram of a data fusion apparatus 700 for a LiDAR system 110 according to an exemplary embodiment. As shown in FIG. 7, the apparatus 700 includes: a first obtaining unit 710 configured to obtain a first point cloud data set of the LiDAR system 110 at a first time point and a second point cloud data set of the system at a second time point separately, where the first point cloud data set includes first point cloud data of the source radar 111 and first point cloud data of the at least one secondary radar 112, and the second point cloud data set includes second point cloud data of the source radar 111 and second point cloud data of the at least one secondary radar 112; a determining unit 720 configured to determine a plurality of candidate transformation matrix sets based on the first point cloud data set, where each candidate transformation matrix set corresponds to one secondary radar 112 and includes a plurality of candidate transformation matrices for transforming point cloud data of the corresponding secondary radar 112 into a coordinate system of the source radar 111; a selection unit configured to select a target transformation matrix from a plurality of candidate transformation matrices in each of the plurality of candidate transformation matrix sets based on the second point cloud data set; and a fusion unit 730 configured to fuse point cloud data of the source radar 111 and point cloud data of the at least one secondary radar 112 based on a target transformation matrix corresponding to each secondary radar 112.

It should be understood that the units of the apparatus 700 shown in FIG. 7 may correspond to the steps in the method 200 described with reference to FIG. 2. Therefore, the operations, features, and advantages described above for the method 200 are also applicable to the apparatus 700 and the units included therein. For the sake of brevity, some operations, features, and advantages are not described herein again.

In some embodiments, the data fusion apparatus 700 may further include: a second obtaining unit and a correction unit. The second obtaining unit is configured to obtain a third point cloud data set of the LiDAR system online at a third time point, where the third point cloud data set includes third point cloud data of the source radar and third point cloud data of the at least one secondary radar. The correction unit is configured to correct the plurality of selected target transformation matrices based on the third point cloud data set. The correction unit is configured to automatically correct and calibrate the plurality of target transformation matrices in real time during the use of the LiDAR system 110. Therefore, the problem of inaccurate image fusion caused by an offset of the LiDAR during use can be effectively solved, and an effect of point cloud data fusion may be further improved. For specific operations of the second obtaining unit and the correction unit, reference may be made to the above description of the method 600, and details are not repeated here.

Although specific functions are discussed above with reference to specific modules, it should be noted that the functions of the various modules discussed herein may be divided into a plurality of modules, and/or at least some functions of a plurality of modules may be combined into a single module. The specific module performing actions discussed herein includes the specific module performing the action itself, or alternatively, the specific module invoking or otherwise accessing another component or module that performs the action (or performs the action together with the specific module). Therefore, the specific module performing the action may include the specific module performing the action itself and/or another module that the specific module invokes or otherwise accesses to perform the action. As used herein, the phrase "an entity A initiates an action B" may mean that the entity A issues instructions to perform the action B, but the entity A does not necessarily perform the action B itself.

It should be further understood that, various technologies may be described herein in the general context of software and hardware elements or program modules. The various modules described above with respect to FIG. 7 may be implemented in hardware or in hardware incorporating software and/or firmware. For example, these modules may be implemented as computer program code/instructions configured to be executed in one or more processors and stored in a computer-readable storage medium. Alternatively, these modules may be implemented as hardware logic/circuitry. For example, in some embodiments, one or more of the first obtaining unit 710, the determining unit 720, and the fusion unit 730 may be implemented together in a system on chip (SoC). The SoC may include an integrated circuit chip (which includes a processor (e.g., a central processing unit (CPU), a micro-controller, a microprocessor, a digital signal processor (DSP), etc.), a memory, one or more communication interfaces, and/or one or more components in other circuits), and may optionally execute the received program code and/or include embedded firmware to perform functions.

According to an aspect of the present disclosure, there is provided a computer device, including a memory, a processor, and a computer program stored on the memory. The processor is configured to execute the computer program to implement the steps of any of the method embodiments described above.

According to an aspect of the present disclosure, there is provided a non-transitory computer-readable storage medium having a computer program stored thereon, where when the computer program is executed by a processor, the steps of any of the method embodiments described above are implemented.

According to an aspect of the present disclosure, there is provided a computer program product, including a computer program, where when the computer program is executed by a processor, the steps of any of the method embodiments described above are implemented.

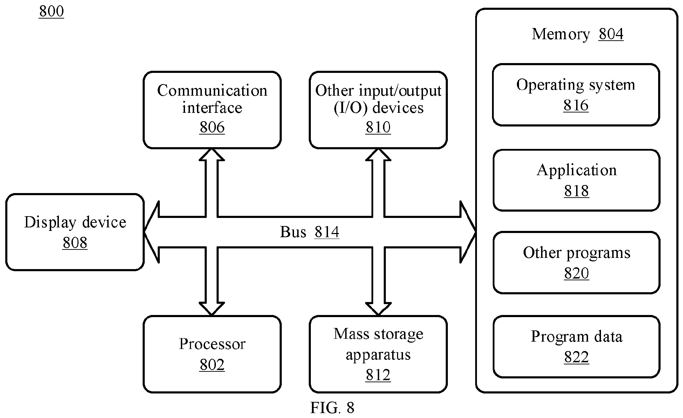

Illustrative examples of such a computer device, a non-transitory computer-readable storage medium, and a computer program product will be described below in conjunction with Fig. 8.

FIG. 8 shows an example configuration of a computer device 800 that may be used to implement the method described herein. For example, the server 120 and/or the LiDAR system 110 shown in FIG. 1 may include an architecture similar to a computer device 800, or it may be implemented in whole or at least in part by the computer device 800 or a similar device or system.

The computer device 800 may be various different types of devices. Examples of the computer device 800 include, but are not limited to: a desktop computer, a server computer, a laptop computer or a netbook computer, a mobile device (e.g. a tablet computer, cellular or other wireless phones (e.g. smart phones), a notebook computer, a mobile station), a wearable device (e.g. glasses, a watch), an entertainment device (e.g. an entertainment appliance, a set-top box communicatively coupled to a display device, a game console), a television or other display devices, a car computer, etc.

The computer device 800 may include at least one processor 802, memory 804, communication interface(s) 806, a display device 808, other input/output (I/O) devices 810, and one or more mass storage devices 812 that can communicate with each other, such as through a system bus 814 or other appropriate connections.

The processor 802 may be a single processing unit or a plurality of processing units, and all the processing units may include a single computing unit or a plurality of computing units or a plurality of cores. The processor 802 may be implemented as one or more microprocessors, microcomputers, micro-controllers, digital signal processors, central processing units, state machines, logic circuits, and/or any devices that manipulate signals based on operation instructions. In addition to other capabilities, the processor 802 may be configured to acquire and execute computer-readable instructions stored in the memory 804, the mass storage device 812, or other computer-readable media, such as program code of an operating system 816, program code of an application program 818, program code of other programs 820, etc.

The memory 804 and the mass storage device 812 are examples of the computer-readable storage medium used for storing instructions, and the instructions are executed by the processor 802 to implement the various functions described above. By way of example, the memory 804 may generally include both volatile memory and non-volatile memory (e.g. RAM, ROM, etc.). In addition, the mass storage device 812 may generally include a hard disk drive, a solid state drive, a removable medium, including external and removable drives, a memory card, a flash memory, a floppy disk, an optical disk (e.g. CD, DVD), a storage array, a network attached storage, a storage area network, etc. The memory 804 and the mass storage device 812 may be collectively referred to herein as a memory or a computer-readable storage medium, and may be a non-transitory medium capable of storing computer-readable and processor-executable program instructions as computer program code. The computer program code may be executed by the processor 802 as a specific machine configured to implement the operations and functions described in the examples herein.

A plurality of programs may be stored on the mass storage device 812. These programs include an operating system 816, one or more application programs 818, other programs 820, and program data 822, and they may be loaded onto the memory 804 for execution. Examples of such applications or program modules may include, for example, computer program logic (for example, computer program code or instructions) for implementing the following components/functions: the first obtaining unit 710, the determining unit 720, the fusion unit 730, the method 200 to the method 600 (including any suitable steps of the methods), and/or other embodiments described herein.

Although shown in FIG. 8 as being stored in the memory 804 of the computer device 800, the modules 816, 818, 820, and 822 or parts thereof may be implemented using any form of computer-readable medium that is accessible by the computer device 800. As used herein, "computer-readable medium" includes at least two types of computer-readable media, that is, a computer-readable storage medium and a communication medium.

The computer-readable storage medium includes volatile and nonvolatile, removable and non-removable media implemented by any method or technology for storage of information, such as computer-readable instructions, data structures, program modules, or other data. The computer-readable storage medium includes, but is not limited to, RAM, ROM, EEPROM, a flash memory or other memory technologies, CD-ROM, a digital versatile disk (DVD), or other optical storage apparatuses, a magnetic cassette, a tape, a disk storage apparatus or other magnetic storage devices, or any other non-transmission media that can be used to store information for access by a computer device. In contrast, the communication medium may specifically implement computer-readable instructions, data structures, program modules, or other data in a modulated data signal, such as a carrier wave or other transmission mechanisms. The computer-readable storage medium as defined herein does not include the communication medium.

One or more communication interfaces 806 are configured to exchange data with other devices, such as over a network, or direct connection. Such a communication interface can be one or more of the following: any type of network interface (e.g. a network interface card (NIC)), a wired or wireless (such as IEEE 802.11 wireless LAN (WLAN)) wireless interface, a world interoperability for microwave access (Wi-MAX) interface, an Ethernet interface, a universal serial bus (USB) interface, a cellular network interface, a Bluetooth™ interface, a near field communication (NFC) interface, etc. The communication interface 806 can facilitate communication within a variety of networks and protocol types, including wired networks (such as LAN, cable, etc.) and wireless networks (such as WLAN, cellular, satellite, etc.), the Internet, etc. The communication interface 806 may also provide communication with an external storage apparatus (not shown) in a storage array, a network attached storage, a storage area network, etc.

In some examples, the display device 808 such as a monitor may be included for displaying information and images to a user. The other I/O devices 810 may be devices that receive various inputs from a user and provide various outputs to the user, and may include a touch input device, a gesture input device, a camera, a keyboard, a remote controller, a mouse, a printer, audio input/output devices, etc.

The technologies described herein may be supported by these various configurations of the computer device 800 and are not limited to the specific examples of the technologies described herein. For example, this functionality may also be implemented all or in part over a "cloud" through use of a distributed system. The cloud includes and/or represents a platform for resources. The platform abstracts underlying functions of hardware (for example, servers) and software resources of the cloud. The resources may include applications and/or data that can be used while computing processing is executed on servers that are remote from the computer device 800. Resources may further include services provided over the Internet and/or over a subscriber network, such as a cellular or Wi-Fi network. The platform may abstract resources and functions to connect the computer device 800 with other computer devices. Accordingly, implementation of the functions described herein may be distributed throughout the cloud. For example, the functions may be implemented in part on the computer device 800 and in part through a platform that abstracts the functions of the cloud.

Some exemplary solutions of the present disclosure are described below.

Solution 1. A data fusion method for a LiDAR system, where the LiDAR system includes a source radar and at least one secondary radar, and the data fusion method includes:

obtaining a first point cloud data set of the LiDAR system at a first time point and a second point cloud data set of the system at a second time point separately, where the first point cloud data set includes first point cloud data of the source radar and first point cloud data of the at least one secondary radar, and the second point cloud data set includes second point cloud data of the source radar and second point cloud data of the at least one secondary radar;

determining a plurality of candidate transformation matrix sets based on the first point cloud data set, where each candidate transformation matrix set corresponds to one secondary radar and includes a plurality of candidate transformation matrices for transforming point cloud data of the corresponding secondary radar into a coordinate system of the source radar;

selecting a target transformation matrix from a plurality of candidate transformation matrices in each of the plurality of candidate transformation matrix sets based on the second point cloud data set; and

fusing point cloud data of the source radar and point cloud data of the at least one secondary radar based on a target transformation matrix corresponding to each secondary radar.

Solution 2. The method according to solution 1, where the determining a plurality of candidate transformation matrix sets based on the first point cloud data set includes:

for each of the at least one secondary radar:

determining a plurality of corresponding sets of homologous points from each of first point cloud data of the secondary radar and the first point cloud data of the source radar;

calculating, based on the plurality of sets of homologous points, a plurality of preselected transformation matrices corresponding to the secondary radar, where a preselected transformation matrix from coordinates in the point cloud data of the secondary radar to coordinates in the point cloud data of the source radar is determined based on homologous points in each set of the plurality of sets of homologous points; and

determining a plurality of candidate transformation matrices respectively based on the plurality of preselected transformation matrices, to form a candidate transformation matrix set corresponding to the secondary radar.

Solution 3. The method according to solution 2, where the determining a plurality of candidate transformation matrices respectively based on the plurality of preselected transformation matrices, to form a candidate transformation matrix set corresponding to the secondary radar includes:

applying the plurality of preselected transformation matrices to the first point cloud data of the corresponding secondary radar separately to obtain a plurality of pieces of first transformed point cloud data in the coordinate system of the source radar;
calculating a first error value between each piece of first transformed point cloud data and the first point cloud data of the source radar; and
performing an iterative calculation on the corresponding preselected transformation matrix based on the first error value to determine a corresponding candidate transformation matrix.

Solution 4. The method according to solution 3, where the calculating a first error value between each piece of first transformed point cloud data and the first point cloud data of the source radar includes:

calculating a plurality of first distances between a plurality of points in each piece of first transformed point cloud data and corresponding points in the first point cloud data of the source radar; and
determining the first error value based at least on the plurality of first distances.

Solution 5. The method according to any one of solutions 2 to 4, where each of the plurality of preselected transformation matrices includes rotation parameters representing a rotation matrix in the preselected transformation matrix and translation parameters representing a translation matrix in the preselected transformation matrix, where the determining, based on homologous points in each set of the plurality of sets of homologous points, a preselected transformation matrix from coordinates in the point cloud data of the secondary radar to coordinates in the point cloud data of the source radar includes:
determining rotation parameters and translation parameters of a corresponding preselected transformation matrix based on coordinates of the homologous points in each of the first point cloud data of the secondary radar and the first point cloud data of the source radar.

Solution 6. The method according to any one of solutions 1 to 5, where the selecting a target transformation matrix from a plurality of candidate transformation matrices in each of the plurality of candidate transformation matrix sets based on the second point cloud data set includes:

applying the plurality of candidate transformation matrices in the candidate transformation matrix set to the second point cloud data of the corresponding secondary radar separately to obtain a plurality of pieces of second transformed point cloud data in the coordinate system of the source radar;
calculating a second error value between each piece of second transformed point cloud data and the second point cloud data of the source radar; and
selecting a target transformation matrix from the plurality of candidate transformation matrices in the candidate transformation matrix set based on the plurality of calculated second error values.

Solution 7. The method according to solution 6, where the calculating a second error value between each piece of second transformed point cloud data and the second point cloud data of the source radar includes:

calculating a plurality of second distances between a plurality of points in each piece of second transformed point cloud data and corresponding points in the second point cloud data of the source radar; and
determining the second error value based at least on the plurality of second distances.

Solution 8. The method according to any one of solutions 1 to 7, further including:
after the obtaining a first point cloud data set of the LiDAR system at a first time point and a second point cloud data set of the system at a second time point separately,

performing orientation calibration on the first point cloud data set and/or the second point cloud data set; and
removing noise and dynamic points from the first point cloud data set and/or the second point cloud data set.

Solution 9. The method according to any one of solutions 1 to 8, further including:
after the selecting a target transformation matrix from a plurality of candidate transformation matrices in each of the plurality of candidate transformation matrix sets based on the second point cloud data set,

obtaining a third point cloud data set of the LiDAR system online at a third time point, where the third point cloud data set includes third point cloud data of the source radar and third point cloud data of the at least one secondary radar; and

correcting the plurality of selected target transformation matrices based on the third point cloud data set.

Solution 10. The method according to solution 9, where each of the plurality of target transformation matrices at least includes rotation parameters representing a rotation matrix in the target transformation matrix and translation parameters representing a translation matrix in the target transformation matrix, where the correcting the plurality of selected target transformation matrices based on the third point cloud data set includes:

applying the plurality of target transformation matrices to the third point cloud data of the corresponding secondary radar separately to obtain a plurality of pieces of third transformed point cloud data in the coordinate system of the source radar;

calculating a third error value between each piece of third transformed point cloud data and the third point cloud data of the source radar; and

in response to that the third error value is greater than a preset error threshold, performing iterative calculations on the rotation parameters and the translation parameters to determine a corrected target transformation matrix.

Solution 11. The method according to solution 10, where the calculating a third error value between each piece of third transformed point cloud data and the third point cloud data of the source radar includes:

calculating a plurality of third distances between a plurality of points in each piece of third transformed point cloud data and corresponding points in the third point cloud data of the source radar; and

determining the third error value based at least on the plurality of third distances.

Solution 12. A data fusion apparatus for a LiDAR system, where the LiDAR system includes a source radar and at least one secondary radar, and the data fusion apparatus includes:

a first obtaining unit configured to obtain a first point cloud data set of the LiDAR system at a first time point and a second point cloud data set of the system at a second time point separately, where the first point cloud data set includes first point cloud data of the source radar and first point cloud data of the at least one secondary radar, and the second point cloud data set includes second point cloud data of the source radar and second point cloud data of the at least one secondary radar;

a determining unit configured to determine a plurality of candidate transformation matrix sets based on the first point cloud data set, where each candidate transformation matrix set corresponds to one secondary radar and includes a plurality of candidate transformation matrices for transforming point cloud data of the corresponding secondary radar into a coordinate system of the source radar;

a selection unit configured to select a target transformation matrix from a plurality of candidate transformation matrices in each of the plurality of candidate transformation matrix sets based on the second point cloud data set; and

a fusion unit configured to fuse point cloud data of the source radar and point cloud data of the at least one secondary radar based on a target transformation matrix corresponding to each secondary radar.

Solution 13. The data fusion apparatus according to solution 12, further including: a second obtaining unit configured to obtain a third point cloud data set of the LiDAR system online at a third time point, where the third point cloud data set includes third point cloud data of the source radar and third point cloud data of the at least one secondary radar; and a correction unit configured to correct the plurality of selected target transformation matrices based on the third point cloud data set.

Solution 14. A computer device, including:

at least one processor; and

at least one memory having a computer program stored thereon,

where the computer program, when executed by the at least one processor, causes the at least one processor to perform a method according to any one of solutions 1 to 11.

Solution 15. A computer-readable storage medium having a computer program stored thereon, where the computer program, when executed by a processor, causes the processor to perform a method according to any one of solutions 1 to 11.

Solution 16. A computer program product, including a computer program that, when executed by a processor, causes the processor to perform a method according to any one of solutions 1 to 11.

Although the present disclosure has been illustrated and described in detail in the drawings and the above description, such illustration and description should be considered illustrative and schematic, rather than limiting; and the present disclosure is not limited to the disclosed embodiments. By studying the accompanying drawings, the disclosure, and the appended claims, those skilled in the art can understand and implement modifications to the disclosed embodiments when practicing the claimed subject matter. In the claims, the word "comprising" does not exclude other elements or steps not listed, the indefinite article "a" or "an" does not exclude plural, the term "a plurality of" means two or more, and the term "based on" should be interpreted as "at least partially based on". The mere fact that certain measures are recited in mutually different dependent claims does not indicate that a combination of these measures cannot be used to get benefit.

**Claims**

1. A data fusion method for a LiDAR system, wherein the LiDAR system comprises a source radar and at least one secondary radar, and the data fusion method comprises:

   obtaining a first point cloud data set of the LiDAR system at a first time point and a second point cloud data set of the system at a second time point separately, wherein the first point cloud data set comprises first point cloud data of the source radar and first point cloud data of the at least one secondary radar, and the second point cloud data set comprises second point cloud data of the source radar and second point cloud data of the at least one secondary radar;

   determining a plurality of candidate transformation matrix sets based on the first point cloud data set, wherein each candidate transformation matrix set corresponds to one secondary radar and comprises a plurality of candidate transformation matrices for transforming point cloud data of the corresponding secondary radar into a coordinate system of the source radar;

   selecting a target transformation matrix from a plurality of candidate transformation matrices in each of the plurality of candidate transformation matrix sets based on the second point cloud data set; and

   fusing point cloud data of the source radar and point cloud data of the at least one secondary radar based on a target transformation matrix corresponding to each secondary radar.

2. The method according to claim 1, wherein the determining a plurality of candidate transformation matrix sets based on the first point cloud data set comprises:
   for each of the at least one secondary radar:

   determining a plurality of corresponding sets of homologous points from each of first point cloud data of the secondary radar and the first point cloud data of the source radar;

   calculating, based on the plurality of sets of homologous points, a plurality of preselected transformation matrices corresponding to the secondary radar, wherein a preselected transformation matrix from coordinates in the point cloud data of the secondary radar to coordinates in the point cloud data of the source radar is determined based on homologous points in each set of the plurality of sets of homologous points; and

   determining a plurality of candidate transformation matrices respectively based on the plurality of preselected transformation matrices, to form a candidate transformation matrix set corresponding to the secondary radar.

3. The method according to claim 2, wherein the determining a plurality of candidate transformation matrices respectively based on the plurality of preselected transformation matrices, to form a candidate transformation matrix set corresponding to the secondary radar comprises:

   applying the plurality of preselected transformation matrices to the first point cloud data of the corresponding secondary radar separately to obtain a plurality of pieces of first transformed point cloud data in the coordinate system of the source radar;

   calculating a first error value between each piece of first transformed point cloud data and the first point cloud data of the source radar; and

   performing an iterative calculation on the corresponding preselected transformation matrix based on the first error value to determine a corresponding candidate transformation matrix.

4. The method according to claim 3, wherein the calculating a first error value between each piece of first transformed point cloud data and the first point cloud data of the source radar comprises:

calculating a plurality of first distances between a plurality of points in each piece of first transformed point cloud data and corresponding points in the first point cloud data of the source radar; and

determining the first error value based at least on the plurality of first distances.

5. The method according to any of claims 2 to 4, wherein each of the plurality of preselected transformation matrices comprises rotation parameters representing a rotation matrix in the preselected transformation matrix and translation parameters representing a translation matrix in the preselected transformation matrix, wherein the determining, based on homologous points in each set of the plurality of sets of homologous points, a preselected transformation matrix from coordinates in the point cloud data of the secondary radar to coordinates in the point cloud data of the source radar comprises:

determining rotation parameters and translation parameters of a corresponding preselected transformation matrix based on coordinates of the homologous points in each of the first point cloud data of the secondary radar and the first point cloud data of the source radar.

6. The method according to any one of claims 1 to 5, wherein the selecting a target transformation matrix from a plurality of candidate transformation matrices in each of the plurality of candidate transformation matrix sets based on the second point cloud data set comprises:

applying the plurality of candidate transformation matrices in the candidate transformation matrix set to the second point cloud data of the corresponding secondary radar separately to obtain a plurality of pieces of second transformed point cloud data in the coordinate system of the source radar;

calculating a second error value between each piece of second transformed point cloud data and the second point cloud data of the source radar; and

selecting a target transformation matrix from the plurality of candidate transformation matrices in the candidate transformation matrix set based on the plurality of calculated second error values.

7. The method according to claim 6, wherein the calculating a second error value between each piece of second transformed point cloud data and the second point cloud data of the source radar comprises:

calculating a plurality of second distances between a plurality of points in each piece of second transformed point cloud data and corresponding points in the second point cloud data of the source radar; and

determining the second error value based at least on the plurality of second distances.

8. The method according to any one of claims 1 to 7, further comprising:
after the obtaining a first point cloud data set of the LiDAR system at a first time point and a second point cloud data set of the system at a second time point separately,

performing orientation calibration on the first point cloud data set and/or the second point cloud data set; and

removing noise and dynamic points from the first point cloud data set and/or the second point cloud data set.

9. The method according to any one of claims 1 to 8, further comprising:
after the selecting a target transformation matrix from a plurality of candidate transformation matrices in each of the plurality of candidate transformation matrix sets based on the second point cloud data set,

obtaining a third point cloud data set of the LiDAR system online at a third time point, wherein the third point cloud data set comprises third point cloud data of the source radar and third point cloud data of the at least one secondary radar; and

correcting the plurality of selected target transformation matrices based on the third point cloud data set.

10. The method according to claim 9, wherein each of the plurality of target transformation matrices at least comprises rotation parameters representing a rotation matrix in the target transformation matrix and translation parameters representing a translation matrix in the target transformation matrix, wherein the correcting the plurality of selected target transformation matrices based on the third point cloud data set comprises:

applying the plurality of target transformation matrices to the third point cloud data of the corresponding secondary radar separately to obtain a plurality of pieces of third transformed point cloud data in the coordinate system of the source radar;

calculating a third error value between each piece of third transformed point cloud data and the third point cloud data of the source radar; and
in response to that the third error value is greater than a preset error threshold, performing iterative calculations on the rotation parameters and the translation parameters to determine a corrected target transformation matrix.

11. The method according to claim 10, wherein the calculating a third error value between each piece of third transformed point cloud data and the third point cloud data of the source radar comprises:

calculating a plurality of third distances between a plurality of points in each piece of third transformed point cloud data and corresponding points in the third point cloud data of the source radar; and
determining the third error value based at least on the plurality of third distances.

12. A data fusion apparatus for a LiDAR system, wherein the LiDAR system comprises a source radar and at least one secondary radar, and the data fusion apparatus comprises:

a first obtaining unit configured to obtain a first point cloud data set of the LiDAR system at a first time point and a second point cloud data set of the system at a second time point separately, wherein the first point cloud data set comprises first point cloud data of the source radar and first point cloud data of the at least one secondary radar, and the second point cloud data set comprises second point cloud data of the source radar and second point cloud data of the at least one secondary radar;
a determining unit configured to determine a plurality of candidate transformation matrix sets based on the first point cloud data set, wherein each candidate transformation matrix set corresponds to one secondary radar and comprises a plurality of candidate transformation matrices for transforming point cloud data of the corresponding secondary radar into a coordinate system of the source radar;
a selection unit configured to select a target transformation matrix from a plurality of candidate transformation matrices in each of the plurality of candidate transformation matrix sets based on the second point cloud data set; and
a fusion unit configured to fuse point cloud data of the source radar and point cloud data of the at least one secondary radar based on a target transformation matrix corresponding to each secondary radar.

13. The data fusion apparatus according to claim 12, further comprising:

a second obtaining unit configured to obtain a third point cloud data set of the LiDAR system online at a third time point, wherein the third point cloud data set comprises third point cloud data of the source radar and third point cloud data of the at least one secondary radar; and
a correction unit configured to correct the plurality of selected target transformation matrices based on the third point cloud data set.

14. A computer device, comprising:

at least one processor; and
at least one memory having a computer program stored thereon,
wherein the computer program, when executed by the at least one processor, causes the at least one processor to perform a method according to any one of claims 1 to 11.

15. A computer-readable storage medium having a computer program stored thereon, wherein the computer program, when executed by a processor, causes the processor to perform a method according to any one of claims 1 to 11.

<u>100</u>

<u>120</u>

<u>130</u>

<u>110</u>

111

112

112

112

FIG. 1

<u>200</u>

```
         ┌─────────────┐
         │    Start     │
         └─────────────┘
                │
                ▼
```

Obtain a first point cloud data set of a LiDAR system at a first time point and a second point cloud data set of the system at a second time point separately, where the first point cloud data set includes first point cloud data of a source radar and first point cloud data of at least one secondary radar, and the second point cloud data set includes second point cloud data of the source radar and second point cloud data of the at least one secondary radar    ⟶ 210

Determine a plurality of candidate transformation matrix sets based on the first point cloud data set, where each candidate transformation matrix set corresponds to one secondary radar and includes a plurality of candidate transformation matrices for transforming point cloud data of the corresponding secondary radar into a coordinate system of the source radar    ⟶ 220

Select a target transformation matrix from a plurality of candidate transformation matrices in each of the plurality of candidate transformation matrix sets based on the second point cloud data set    ⟶ 230

Fuse point cloud data of the source radar and point cloud data of the at least one secondary radar based on a target transformation matrix corresponding to each secondary radar    ⟶ 240

```
         ┌─────────────┐
         │     End      │
         └─────────────┘
```

FIG. 2

300

```
         ┌─────────────┐
         │    Start     │
         └──────┬──────┘
                │
                ▼
```

For each of at least one secondary radar, determine a plurality of corresponding sets of homologous points from each of first point cloud data of the secondary radar and first point cloud data of a source radar ～ 310

Calculate, based on the plurality of sets of homologous points, a plurality of preselected transformation matrices corresponding to the secondary radar, where a preselected transformation matrix from coordinates in the point cloud data of the secondary radar to coordinates in the point cloud data of the source radar is determined based on homologous points in each set of the plurality of sets of homologous points ～ 320

Determine a plurality of candidate transformation matrices respectively based on the plurality of preselected transformation matrices, to form a candidate transformation matrix set corresponding to the secondary radar ～ 330

```
         ┌─────────────┐
         │    End      │
         └─────────────┘
```

FIG. 3

<u>400</u>

```
            ┌─────────────┐
            │    Start    │
            └──────┬──────┘
                   │
                   ▼
┌──────────────────────────────────────┐
│  Apply the plurality of preselected  │        410
│  transformation matrices to first    │    ⌇
│  point cloud data of a corresponding │
│  secondary radar separately to obtain│
│  a plurality of pieces of first      │
│  transformed point cloud data in a   │
│  coordinate system of a source radar │
└──────────────────┬───────────────────┘
                   │
                   ▼
┌──────────────────────────────────────┐
│ Calculate a first error value between│        420
│ each piece of first transformed point│    ⌇
│ cloud data and first point cloud data│
│         of the source radar          │
└──────────────────┬───────────────────┘
                   │
                   ▼
┌──────────────────────────────────────┐
│ Perform an iterative calculation on a│
│ corresponding preselected            │        430
│ transformation matrix based on the   │    ⌇
│ first error value to determine a     │
│ corresponding candidate transformation│
│              matrix                  │
└──────────────────┬───────────────────┘
                   │
                   ▼
            ┌─────────────┐
            │     End     │
            └─────────────┘
```

FIG. 4

<u>500</u>

```
                    ┌─────────────┐
                    │    Start    │
                    └──────┬──────┘
                           │
                           ▼
```

Apply a plurality of candidate transformation matrices in a candidate transformation matrix set to second point cloud data of a corresponding secondary radar separately to obtain a plurality of pieces of second transformed point cloud data in a coordinate system of a source radar — 510

Calculate a second error value between each piece of second transformed point cloud data and second point cloud data of the source radar — 520

Select a target transformation matrix from the plurality of candidate transformation matrices in the candidate transformation matrix set based on the plurality of calculated second error values — 530

```
                    ┌─────────────┐
                    │     End     │
                    └─────────────┘
```

FIG. 5

<u>600</u>

```
                    ╭─────────────╮
                    │    Start    │
                    ╰──────┬──────╯
                           │
                           ▼
   ┌───────────────────────────────────────────────┐
   │  Apply a plurality of target transformation    │      610
   │  matrices to third point cloud data of a       │
   │  corresponding secondary radar separately to   │
   │  obtain a plurality of pieces of third         │
   │  transformed point cloud data in a coordinate  │
   │  system of a source radar                      │
   └───────────────────────┬───────────────────────┘
                           │
                           ▼
   ┌───────────────────────────────────────────────┐
   │  Calculate a third error value between each    │      620
   │  piece of third transformed point cloud data   │
   │  and the third point cloud data of the source  │
   │  radar                                         │
   └───────────────────────┬───────────────────────┘
                           │
                           ▼
   ┌───────────────────────────────────────────────┐
   │  In response to that the third error value is  │      630
   │  greater than a preset error threshold,        │
   │  perform iterative calculations on rotation    │
   │  parameters and translation parameters to      │
   │  determine a corrected target transformation   │
   │  matrix                                        │
   └───────────────────────┬───────────────────────┘
                           │
                           ▼
                    ╭─────────────╮
                    │     End     │
                    ╰─────────────╯
```

FIG. 6

700

```
┌─────────────────────────────────┐
│                                 │
│   ┌─────────────────────────┐   │
│   │   First obtaining unit   │   │
│   │          710             │   │
│   └─────────────────────────┘   │
│                                 │
│   ┌─────────────────────────┐   │
│   │    Determining unit      │   │
│   │          720             │   │
│   └─────────────────────────┘   │
│                                 │
│   ┌─────────────────────────┐   │
│   │      Fusion unit         │   │
│   │          730             │   │
│   └─────────────────────────┘   │
│                                 │
└─────────────────────────────────┘
```

FIG. 7

800

```
                ┌──────────────┐    ┌──────────────┐              ┌─────────────────────────┐
                │ Communication│    │Other input/  │              │      Memory  804        │
                │  interface   │    │output (I/O)  │              │  ┌───────────────────┐  │
                │     806      │    │  devices     │              │  │ Operating system  │  │
                └──────────────┘    │     810      │              │  │       816         │  │
                                    └──────────────┘              │  └───────────────────┘  │
┌──────────────┐                                                  │  ┌───────────────────┐  │
│Display device│◄────────── Bus  814 ──────────────►              │  │   Application     │  │
│     808      │                                                  │  │       818         │  │
└──────────────┘                                                  │  └───────────────────┘  │
                ┌──────────────┐    ┌──────────────┐              │  ┌───────────────────┐  │
                │  Processor   │    │ Mass storage │              │  │  Other programs   │  │
                │     802      │    │  apparatus   │              │  │       820         │  │
                └──────────────┘    │     812      │              │  └───────────────────┘  │
                                    └──────────────┘              │  ┌───────────────────┐  │
                                                                  │  │   Program data    │  │
                                                                  │  │       822         │  │
                                                                  │  └───────────────────┘  │
                                                                  └─────────────────────────┘
```

FIG. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 960 630 A (SHANDONG NEW GENERATION INFORMATION INDUSTRY TECH RESEARCH INSTITUTE C) 21 January 2022 (2022-01-21) * abstract * * paragraph [0005] * | 1,2,8-15 | INV. G01S17/87 G01S17/89 G06T5/50 G01C21/32 G06F17/16 |
| X | CN 114 648 471 A (SHANGHAI CEREAL SCIENCE AND TECH CO LTD) 21 June 2022 (2022-06-21) * abstract * | 1,12,14, 15 | |
| X | US 2022/244057 A1 (WANG XIANGYANG [CN] ET AL) 4 August 2022 (2022-08-04) * abstract * * paragraph [0028] * | 1,12,14, 15 | |

TECHNICAL FIELDS
SEARCHED      (IPC)

G01S
G06T
G01C
G06F

The present search report has been drawn up for all claims

| Place of search | Date of completion of the search | Examiner |
|---|---|---|
| Munich | 31 January 2024 | Alberga, Vito |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 4715

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | | Publication date | Patent family member(s) | | Publication date |
|---|---|---|---|---|---|
| CN 113960630 | A | 21-01-2022 | NONE | | |
| CN 114648471 | A | 21-06-2022 | NONE | | |
| US 2022244057 | A1 | 04-08-2022 | CN | 113628236 A | 09-11-2021 |
| | | | EP | 4064212 A2 | 28-09-2022 |
| | | | JP | 2022106926 A | 20-07-2022 |
| | | | KR | 20220075275 A | 08-06-2022 |
| | | | US | 2022244057 A1 | 04-08-2022 |

EPO FORM P0459

For more details about this annex : see Official Journal of the European Patent Office, No. 12/82